# EUROPÄISCHE PATENTSCHRIFT

(11) **EP 3 973 831 B1**
(45) Veröffentlichungstag und Bekanntmachung des Hinweises auf die Patenterteilung: **12.06.2024**
(21) Anmeldenummer: 20198065.3
(22) Anmeldetag: 24.09.2020
(51) Int. Cl.: A47J 43/046, A47J 43/07

(54) **KÜCHENMASCHINE NEBST VERFAHREN ZUM ENTNEHMEN EINER SPEISENPROBE**
KITCHEN APPLIANCE AND METHOD FOR TAKING A FOOD SAMPLE
ROBOT DE CUISINE AINSI QUE PROCÉDÉ DE PRÉLÈVEMENT D'UN ÉCHANTILLON ALIMENTAIRE

(43) Veröffentlichungstag der Anmeldung: 30.03.2022
(73) Patentinhaber: Vorwerk & Co. Interholding GmbH, 42270 Wuppertal (DE)
(72) Erfinder: Hilgers, Stefan, 45357 Essen (DE); Dittmann, Sarah, 8038 Zürich (CH)
(74) Vertreter: Gille Hrabal Partnerschaftsgesellschaft mbB Patentanwälte

(56) Entgegenhaltungen:
- EP-A1- 0 024 992
- EP-A1- 2 540 199
- WO-A1-2005/051150
- WO-A1-2019/211213
- US-A1- 2014 104 974

## Beschreibung

Die Erfindung betrifft eine Küchenmaschine zum Durchführen eines Speisenzubereitungsvorgangs durch Erhitzen, Zerkleinern und/oder Mischen einer Speise in einem Speisenzubereitungsgefäß. Die Küchenmaschine umfasst eine Steuerungseinrichtung, die so eingerichtet ist, dass die Steuerungseinrichtung auf Basis von einem oder mehreren Kochparametern dafür sorgt, dass in einem Kochmodus eine Speise in dem Speisenzubereitungsgefäß erhitzt, zerkleinert und/oder gemischt wird. Die Erfindung betrifft ferner ein entsprechendes Verfahren.

Besonders bei hochwertigen Küchenmaschinen erwartet der Benutzer, dass er oder sie mithilfe der Küchenmaschine ein reproduzierbares Kochergebnis von hoher Qualität erzielt. Ferner wird allgemein wie auch bei anderen Küchengeräten erwartet, dass die Benutzung für den Benutzer sicher ist. Aus Gründen der Benutzersicherheit ist bei hochwertigen Küchenmaschinen beispielsweise ein Abschmecken während eines Speisenzubereitungsvorgangs nicht vorgesehen.

Bei einigen Kochmixern mit Deckel, bei denen der Benutzer im Betrieb sukzessive Zutaten von oben in den Behälter einfüllt und dazu im Betrieb den Deckel abnehmen kann, können Sicherheitsrisiken entstehen. Einige Standmixer haben daher eine Sicherheitsverriegelung, die den Betrieb automatisch beendet, sobald der Deckel vom Behältnis abgenommen wird. Bei anderen Standmix-Geräten pausiert der Betrieb für eine kurze Zeit, wenn der Deckel abgenommen wird. Bei wiederum anderen Geräten kann der Deckel im laufenden Betrieb abgenommen werden, um Zutaten zum Mixen dem Behälter von oben zuzuführen.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Küchenmaschine nebst weiterentwickeltem Verfahren bereitzustellen.

Zusätzlich zum oben beschriebenen Stand der Technik wird auch auf die WO2005051150A1 hingewiesen, die eine Küchenmaschine mit einem Behälter und einer Abdeckung sowie einem Motor zum Betrieb der Küchenmaschine offenbart, wobei der Motor automatisch deaktiviert wird, wenn im Betrieb der Küchenmaschine die Abdeckung die vorgesehenen Position zum Verschließen des Behälter verlässt oder entfernt wird. Eine ähnliche Speisenzubereitungsvorrichtung wird auch durch die Druckschrift EP0024992A1 offenbart. Die Druckschrift EP2540199A1 offenbart außerdem einen automatischen Heizkochautomaten.

Die Druckschriften US2014104974A1 und WO2019211213A1 offenbaren Speisenzubereitungsvorrichtungen mit einem Probenentnahmeinstrument.

Zur Lösung der Aufgabe dienen eine Küchenmaschine gemäß Anspruch 1 sowie ein Verfahren gemäß dem Nebenanspruch. Vorteilhafte Ausführungsformen ergeben sich aus den Unteransprüchen.

Zur Lösung der Aufgabe dient eine Küchenmaschine zum Durchführen eines Speisenzubereitungsvorgangs durch Erhitzen, Zerkleinern und/oder Mischen einer Speise in einem Speisenzubereitungsgefäß. Die Küchenmaschine umfasst eine Steuerungseinrichtung, die so eingerichtet ist, dass die Steuerungseinrichtung auf Basis von einem oder mehreren Kochparametern dafür sorgt, dass in einem Kochmodus eine Speise in dem Speisenzubereitungsgefäß erhitzt, zerkleinert und/oder gemischt wird. Ein Probiermodus für ein Entnehmen einer Speisenprobe ist vorgesehen und die Steuerungseinrichtung ist so eingerichtet, dass mindestens einer der Kochparameter im Vergleich zum Kochmodus für ein verändertes Fortführen des Speisenzubereitungsvorgangs modifiziert wird, wenn der Probiermodus aktiviert wird.

Die Erfindung ermöglicht, dass ein Benutzer auf eine wie gewohnt sichere und komfortable Art und Weise ein verbessert reproduzierbares Kochergebnis erzielen kann.

Wie Eingangs erläutert ist das Erzielen eines reproduzierbaren Kochergebnisses bei hochwertigen Küchenmaschinen von besonderer Bedeutung. Vorliegend wurde erkannt, dass ein Kochergebnis durch ein Entnehmen einer Speisenprobe verbessert reproduzierbar erzielt werden kann. Die Speisenprobe erlaubt ein Abschmecken und nachjustieren, z.B. durch Zugabe von Gewürzen, noch bevor ein Ende eines laufenden Speisenzubereitungsvorgangs bzw. eines Rezeptschrittes davon erreicht ist. Wenn beispielsweise eine Speise zu wenig Salz enthält, kann dieser Mangel nach Beendigung eines Erhitzungs- und Mischvorgangs nicht mehr durch ein nachträgliches Auftragen von Salz korrigiert werden, um zum selben Kochergebnis zu gelangen. Wenn das Fehlen des Salzes jedoch während des Koch- und Mischvorgangs durch die Entnahme einer Speisenprobe entdeckt und korrigiert wird, ist das Kochergebnis nahezu identisch. Gleichzeitig wird eine Individualisierung dieses Kochergebnisses erhalten, d.h., eine Anpassung an die Vorlieben oder Eigenheiten des Benutzers, z.B. an seine individuelle Wahrnehmung des Salzgehaltes in einer Speise.

Um eine Speisenprobe zu entnehmen, wird ein Probenentnahmeinstrument in die Speise getaucht und aus dem Behälter entnommen. Anders als bei einem Standmixer, bei dem normalerweise Zutaten für ein sukzessives Mixen von oben in den Behälter fallen gelassen werden, entsteht bei einem Eintauchen eines Probenentnahmeinstrument beispielsweise das Risiko einer Kollision mit dem Werkzeug zum Zerkleinern. Darüber hinaus würde sich der Benutzer je nach Speisenzubereitungsvorgang heißen Dämpfen, die in einigen Fällen unter Druck in Richtung des Benutzers entweichen könnten, aussetzen. Ein Unterbrechen des Betriebs würde diese Risiken beheben, jedoch die Qualität des Kochergebnisses reduzieren. Beispielsweise würden vorgesehene Misch- und Kochzeiträume, die für das Erzielen eines reproduzierbaren Kochergebnisses ausgelegt sind, nicht mehr eingehalten werden können.

Der Erfindung liegt nachfolgend erläuterte Erkenntnis zugrunde. Es wurde erkannt, dass eine sichere Entnahme einer Speisenprobe nicht nur durch ein Beenden oder Unterbrechen des Speisenzubereitungsvorgangs möglich ist, sondern dass ein verändertes Fortführen des Speisenzubereitungsvorgangs ebenfalls eine sichere Entnahme einer Speisenprobe ermöglicht. Darauf basierend wurde ferner festgestellt, dass sich das veränderte Fortführen des Speisenzubereitungsvorgangs weniger negativ auf das Kochergebnis auswirkt als erwartet. Vielmehr resultiert aus der oben erläuterten Möglichkeit der Entnahme einer Speiseprobe im Probiermodus gemäß der vorliegenden Erfindung eine Verbesserung des Kochergebnisses, das insgesamt die oben erwähnten negativen Effekte (aus der nicht unveränderten Fortführung des Speisenzubereitungsvorgangs) überkompensiert. Mit anderen Worten ist insgesamt ein verbessert reproduzierbares Kochergebnis auf eine wie gewohnt sichere und komfortable Art und Weise für den Benutzer erzielbar.

Bei einer Küchenmaschine dient zum Erhitzen vorzugsweise ein Heizelement, das insbesondere am Boden des Speisenzubereitungsgefäßes angeordnet oder integriert ist. Vorzugsweise dient zum Zerkleinern und/oder Mischen ein drehbares Werkzeug, das insbesondere im Bodenbereich des Speisenzubereitungsgefäßes angeordnet ist. Bevorzugt ist ein Antrieb zum Drehen des Werkzeugs in einem Gehäuse der Küchenmaschine angeordnet. Insbesondere ist der Antrieb mit dem Werkzeug über eine Welle verbunden, die sich in abgedichteter Weise durch eine Öffnung im Boden des Speisenzubereitungsgefäßes erstreckt. Bevorzugt hat das Werkzeug eine Klinge.

Eine Steuerungseinrichtung umfasst einen Speicher und einen Prozessor. Der Speicher verfügt grundsätzlich über einen Computer-Programm-Code, d.h. auf dem Speicher speicherbare Befehle. Der Prozessor, der Speicher und der Computer-Programm-Code sind so konfiguriert, dass die Befehle des Computer-Programm-Codes durch die Steuerungseinrichtung ausgeführt werden. Insbesondere ist die Steuerungseinrichtung zum Steuern mit einem Heizelement und/oder einem Antrieb für ein drehbares Werkzeug verbunden.

Ein Kochparameter ist ein in der Steuerungseinrichtung gespeicherter Parameter zum Steuern einer Funktionskomponente für den Speisenzubereitungsvorgang wie z.B. das Heizelement oder den Antrieb. Zu den Funktionskomponenten kann in einer Ausgestaltung eine Druckeinstelleinheit, insbesondere ein ansteuerbares Druckventil, zählen. Beim Heizelement kann ein Kochparameter bevorzugt die Soll-Temperatur vorgeben. Beim Antrieb kann ein Kochparameter die Soll-Drehzahl oder das Soll-Drehmoment festlegen. Bei der Druckeinstelleinheit kann ein Kochparameter den Soll-Druck im Speisenzubereitungsgefäß festlegen. Vorzugsweise sind ein Temperatursensor, ein Drehzahlsensor, ein Drehmomentsensor und/oder ein Drucksensor vorgesehen, die insbesondere mit der Steuerung zwecks Signalübertragung verbunden sind. In einer Ausgestaltung ist der Antrieb und die Steuerung so eingerichtet, dass ein drehbares Werkzeug zum Zerkleinern und/oder Mischen in zwei Drehrichtungen gedreht werden kann, d.h., im Rechtslaufbetrieb und im Linkslaufbetrieb. Insbesondere legt ein Kochparameter eine Soll-Drehrichtung des Werkzeugs zum Zerkleinern und/oder Mischen fest.

Kochmodus meint einen Betriebszustand, in dem alle Kochparameter so eingestellt sind, wie es der aktuelle Speisenzubereitungsvorgang vorsieht, d.h., ohne Berücksichtigung einer Entnahme einer Speisenprobe.

Probiermodus meint einen Betriebszustand, der sich von dem Kochmodus unterscheidet. Der Probiermodus und der Kochmodus sind in der Steuerungseinrichtung implementiert. Mindestens ein Kochparameter des mindestens einen Kochparameters hat für den aktuellen Speisenzubereitungsvorgang einen Wert gemäß dem Kochmodus und einen Wert gemäß dem Probiermodus. Bei mindestens einem Kochparameter ist der Wert gemäß dem Kochmodus und der Wert gemäß dem Probiermodus unterschiedlich. Ein Probiermodus für ein Entnehmen einer Speisenprobe ist insbesondere ein Probiermodus für ein Entnehmen einer Speisenprobe bei einem geöffneten Deckel. Vorzugsweise wird zum Entnehmen einer Speisenprobe der Deckel von dem Speisenzubereitungsgefäß abgehoben, bevorzugt vom Benutzer. In einer Ausgestaltung ist eine automatische Abhebeeinrichtung vorgesehen, die für eine Entnahme einer Speisenprobe den Deckel von dem Speisenzubereitungsgefäß abhebt. Ein automatisches Abheben erfolgt ohne die Kraft des Benutzers. Vorzugsweise ist ein Elektromotor vorgesehen, um das automatische Abheben umzusetzen. Insbesondere wird beim automatischen Abheben der Deckel durch die Abhebeeinrichtung gekippt, so dass der Benutzer eine Speisenprobe aus dem auf diese Weise geöffneten Speisenzubereitungsgefäß entnehmen kann.

Das Merkmal, wonach "mindestens einer der Kochparameter im Vergleich zum Kochmodus für ein verändertes Fortführen des Speisenzubereitungsvorgangs modifiziert wird, wenn der Probiermodus aktiviert wird" meint, dass die Steuerungseinrichtung mindestens einen Kochparameter des mindestens einen Kochparameters modifiziert. Ferner hat die Formulierung "einer der folgenden Kochparameter" die Bedeutung "mindestens einer der folgenden Kochparameter". Der mindestens eine Kochparameter gemäß dem Kochmodus wird modifiziert, so dass dieser Kochparameter dann gemäß dem Probiermodus definiert ist. Der im Vergleich zum Kochmodus modifizierte Wert des Kochparameters gemäß dem Probiermodus führt zu einem veränderten Fortführen des Speisenzubereitungsvorgangs, d.h., der Speisenzubereitungsvorgang wird nicht beendet, unterbrochen oder unverändert fortgesetzt. Beispielsweise wird der Speisenzubereitungsvorgang stattdessen mit geringerer Soll-Temperatur, anderer Soll-Drehrichtung, geringerer Soll-Drehzahl, geringerem Soll-Drehmoment und/oder geringerem Soll-Druck fortgeführt. Ein Aktivieren des Probiermodus erfolgt oder wird initiiert durch ein Aktivierungssignal an die Steuerung. Das Aktivierungssignal kann durch Drücken eines Knopfes, eines Bildzeichens auf einem Touchscreen-Display, durch einen Befehl eines Rezeptschritts eines digitalen Rezeptes und/oder durch ein Sensorsignals ausgelöst werden.

In einer Ausführungsform ist ein Kochparameter von dem mindestens einen Kochparameter, der im Probiermodus im Vergleich zum Kochmodus für das veränderte Fortführen des Speisenzubereitungsvorgangs modifiziert ist, eine Soll-Drehrichtung, insbesondere des drehbaren Werkzeugs zum Zerkleinern und/oder Mischen. Auf diese Weise kann bei geringerer Drehzahl ein Mischen besonders wirkungsvoll fortgesetzt werden. Vorzugsweise weist das Werkzeug eine Klinge und eine stumpfe Kante auf, wobei die Klinge in eine Drehrichtung zeigt (z.B. Rechtslauf) und die stumpfe Kante in die andere Drehrichtung zeigt (z.B. Linkslauf). Der Benutzer kann so auf eine besonders sichere und komfortable Art und Weise ein verbessert reproduzierbares Kochergebnis erzielen.

In einer alternativen oder ergänzenden Ausführungsform ist ein Kochparameter von dem mindestens einen Kochparameter, der im Probiermodus im Vergleich zum Kochmodus für das veränderte Fortführen des Speisenzubereitungsvorgangs modifiziert ist, ein Soll-Drehmoment für das Zerkleinern und/oder Mischen, insbesondere des drehbaren Werkzeugs. Der Benutzer kann so auf eine besonders sichere und komfortable Art und Weise ein verbessert reproduzierbares Kochergebnis erzielen. Es wurde erkannt, dass die Benutzersicherheit besonders wirkungsvoll durch ein Modifizieren des Soll-Drehmoments erhöht werden kann, wenn der Speisenzubereitungsvorgang im Probiermodus verändert fortgeführt wird. Die Steuerungseinrichtung kann bevorzugt die Leistung des elektrischen Antriebs im Probiermodus beispielsweise auf einen Maximalwert begrenzen. Dem Werkzeug zum Zerkleinern und/oder Mischen fehlt dann gewissermaßen die Kraft, um ernsten Schaden durch ein versehentliches Kollidieren mit dem drehenden Werkzeug zu verursachen.

Bei dem einen Kochparameter von dem mindestens einen Kochparameter, der im Probiermodus im Vergleich zum Kochmodus für das veränderte Fortführen des Speisenzubereitungsvorgangs modifiziert ist, handelt es sich um einen Kochparameter des mindestens einen Kochparameters, der im Vergleich zum Kochmodus für ein verändertes Fortführen des Speisenzubereitungsvorgangs modifiziert wird. In einer Ausgestaltung sind in Abhängigkeit von einem Speisenzubereitungsvorgang für den einen oder mehreren Kochparameter von dem mindestens einen Kochparameter jeweils ein Wert gemäß dem Kochmodus und ein Wert gemäß dem Probiermodus festgelegt, d.h., beispielsweise im Speicher der Steuerungseinrichtung gespeichert. Beim Modifizieren wird dem Kochparameter der Wert gemäß dem Probiermodus anstelle des Wertes gemäß dem Kochmodus zugeordnet.

In einer Ausführungsform ist das Soll-Drehmoment - also einer der Kochparameter von dem mindestens einen Kochparameter, der im Vergleich zum Kochmodus für ein verändertes Fortführen des Speisenzubereitungsvorgangs modifiziert wird, - im Probiermodus mindestens 0,1 N*m und/oder höchstens 0,4 N*m. Der Benutzer kann so auf eine besonders sichere und komfortable Art und Weise ein verbessert reproduzierbares Kochergebnis erzielen. Diese Ausführungsform bezieht sich den Fall, wenn das Soll-Drehmoment gemäß dem Kochmodus für den Speisenzubereitungsvorgang größer als 0,4 N*m ist. Mit anderen Worten bezieht sich diese Ausführungsform auf den Fall, dass während des laufenden Speisenzubereitungsvorgangs das Soll-Drehmoment (als der eine Kochparameter von dem mindestens einen Kochparameter) von einem Wert größer als 0,4 N*m gemäß dem Kochmodus auf einen Wert kleiner 0,4 N*m, insbesondere jedoch größer als 0,1 N*m, gemäß dem Probiermodus modifiziert wird. Das Modifizieren erfolgt, wenn der Probiermodus in diesem laufenden Speisenzubereitungsvorgangs aktiviert wird. In einer Ausgestaltung wird der oben genannte Werte 0,4 N*m der zuvor beschriebenen Ausführungsform durch den Wert 1 N*m, 2 N*m oder 3 N*m ersetzt, um die Qualität des Kochergebnisses bei insbesondere solchen Speisen zu verbessern, die eine zusätzliche Barriere für das drehende Werkzeug darstellen, wie z.B. Teig.

In einer Ausgestaltung ist die Steuerungseinrichtung so eingerichtet, dass die Steuerungseinrichtung zum Steuern bzw. Regeln des Soll-Drehmoments eine Drehzahl des drehbaren Werkzeugs durch ein Regeln der Stromstärke für den elektrischen Antrieb konstant hält, aber die maximal mögliche Stromstärke begrenzt, bevorzugt auf höchstens 1 A, besonders bevorzugt höchstens 0,8 A. Um mit hinreichend großer Kraft den Speisenzubereitungsvorgang verändert fortsetzten zu können und damit einem Verschlechtern des Kochergebnisses entgegenzuwirken, ist in einer Ausgestaltung das Soll-Drehmoment wenigstens 0,1 N*m, vorzugsweise wenigsten 0,2 N*m, besonders bevorzugt wenigstens 0,3 N*m. Hierdurch kann beispielsweise sichergestellt werden, dass übliche Zutaten einer Speise mit der erforderlichen Kraft durch das drehende Werkzeug gerührt werden.

Allgemein gilt, dass ein Steuern durch die Steuerungseinrichtung im Sinne dieser Offenbarung ein Regeln oder einen Regelvorgang beinhalten kann.

Die Steuerungseinrichtung kann mithilfe eines Kochparameters eine Funktionskomponente steuern, um das Drehmoment, die Drehzahl bzw. die Temperatur für den Speisenzubereitungsvorgang gemäß dem Kochparameter zu realisieren. Gleiches gilt in einer Ausgestaltung für den Druck bzw. Soll-Druck.

In einer alterativen oder ergänzenden Ausführungsform ist ein Kochparameter von dem mindestens einen Kochparameter, der im Probiermodus im Vergleich zum Kochmodus für das veränderte Fortführen des Speisenzubereitungsvorgangs modifiziert ist, eine Soll-Drehzahl für das Zerkleinern und/oder Mischen, insbesondere des drehbaren Werkzeugs. Der Benutzer kann so auf eine besonders sichere und komfortable Art und Weise ein verbessert reproduzierbares Kochergebnis erzielen. Die Benutzersicherheit kann besonders wirkungsvoll durch ein Modifizieren der Soll-Drehzahl erhöht werden, wenn der Speisenzubereitungsvorgang im Probiermodus verändert fortgeführt wird.

In einer Ausführungsform ist die Soll-Drehzahl - also einer der Kochparameter von dem mindestens einen Kochparameter, der im Vergleich zum Kochmodus für ein verändertes Fortführen des Speisenzubereitungsvorgangs modifiziert wird, - im Probiermodus mindestens 80 U/min und/oder höchstens 120 U/min oder höchstens 220 U/min. Der Benutzer kann so auf eine besonders sichere und komfortable Art und Weise ein verbessert reproduzierbares Kochergebnis erzielen. Diese Ausführungsform bezieht sich den Fall, wenn das Soll-Drehzahl gemäß dem Kochmodus für den Speisenzubereitungsvorgang größer als 120 U/min bzw. 220 U/min ist, d.h., für den aktuellen Speisenzubereitungsvorgang vor dem Modifizieren der Soll-Drehzahl von dem Wert gemäß dem Kochmodus in den Wert gemäß dem Probiermodus.

In einer Ausgestaltung ist ein Wertebereich für die Soll-Drehzahl gemäß dem Probiermodus 80 bis 120 U/min oder 180 bis 220 U/min, insbesondere in Abhängigkeit von der aktuell zubereiteten Speise. Einem verschlechtern des Kochergebnisses kann so verbessert durch das veränderte Fortführen des Speisenzubereitungsvorgangs im Probiermodus entgegengewirkt werden.

In einer alternativen oder ergänzenden Ausführungsform ist ein Kochparameter von dem mindestens einen Kochparameter, der im Probiermodus im Vergleich zum Kochmodus für das veränderte Fortführen des Speisenzubereitungsvorgangs modifiziert ist, eine Soll-Temperatur für das Erhitzen, insbesondere des Heizelements. Der Benutzer kann so auf eine besonders sichere und komfortable Art und Weise ein verbessert reproduzierbares Kochergebnis erzielen. Die Benutzersicherheit kann durch ein Modifizieren der Soll-Temperatur erhöht werden, wenn der Speisenzubereitungsvorgang im Probiermodus verändert fortgeführt wird.

In einer Ausführungsform ist die Soll-Temperatur - also einer der Kochparameter von dem mindestens einen Kochparameter, der im Vergleich zum Kochmodus für ein verändertes Fortführen des Speisenzubereitungsvorgangs modifiziert wird, - im Probiermodus mindestens 30 °C und/oder höchstens 80 °C. Der Benutzer kann so auf eine besonders sichere und komfortable Art und Weise ein verbessert reproduzierbares Kochergebnis erzielen. Da eine Entnahme einer Speisenprobe typischerweise mithilfe eines Probenentnahmeinstruments erfolgt, wird der Benutzer der Temperatur in dem Speisenzubereitungsgefäß nicht unmittelbar ausgesetzt, sondern in einem gewissen Abstand dazu. Ein Aufrechterhalten einer Temperatur in dem oben spezifizierten Bereich für das veränderte Fortsetzten des Speisenzubereitungsvorgangs ermöglicht daher eine hinreichende Benutzersicherheit und einen ausreichenden Benutzerkomfort und wirkt gleichzeitig einem Verschlechtern des Kochergebnisses entgegen. Diese Ausführungsform bezieht sich den Fall, wenn die Soll-Temperatur gemäß dem Kochmodus für den Speisenzubereitungsvorgang größer als 80°C ist, d.h., vor dem Modifizieren des Kochparameters von einem Wert gemäß dem Kochmodus zu einem Wert gemäß dem Probiermodus.

In einer alternativen oder ergänzenden Ausführungsform ist ein Kochparameter von dem mindestens einen Kochparameter, der im Probiermodus im Vergleich zum Kochmodus für das veränderte Fortführen des Speisenzubereitungsvorgangs modifiziert ist, ein Soll-Druck (im Speisenzubereitungsgefäß). Der Benutzer kann so auf eine besonders sichere und komfortable Art und Weise ein verbessert reproduzierbares Kochergebnis erzielen. In einer Ausgestaltung ist der Soll-Druck kleiner als 1,2 bar oder 1,5 bar zum Zeitpunkt der Aktivierung des Probiermodus. Diese Ausgestaltung bezieht sich auf einen Speisenzubereitungsvorgang mit einem Druck im Speisenzubereitungsgefäß von größer als 1,2 bar bzw. 1,5 bar. In einer Ausgestaltung wird anhand des Soll-Drucks als Kochparameter gemäß dem Probiermodus ein Druckablassventil insbesondere für eine durch diesen Kochparameter definierten Zeitraum geöffnet.

In einer Ausführungsform umfasst die Küchenmaschine eine Detektionseinrichtung zum Detektieren eines Abhebens, eines versuchten Abhebens oder eines Schließens eines Deckels. Diese Ausführungsform betrifft also das Detektieren eines Abhebens des Deckels von dem Speisenzubereitungsgefäß, das Detektieren des Versuchs des Abhebens des Deckels von dem Speisenzubereitungsgefäß durch einen Benutzer oder das Detektieren des Schließens des Speisenzubereitungsgefäßes durch den Deckel. Ein Benutzer kann so auf eine besonders sichere und komfortable Art und Weise ein verbessert reproduzierbares Kochergebnis erzielen. Die Beendigung des Probiermodus kann sehr zuverlässig erfolgen.

In einer Ausführungsform umfasst die Detektionseinrichtung einen Kontaktsensor, einen Gewichtssensor oder einen Deckelverriegelungssensor. In einer Ausgestaltung ist der Kontaktsensor in dem Deckel oder im oberen Randbereich des Speisenzubereitungsgefäßes angeordnet und/oder detektiert das Vorhandsein oder Nicht-Vorhandsein des Deckels auf dem Speisenzubereitungsgefäß. In einer Ausgestaltung detektiert der Kontaktsensor das Überschreiten eines festgelegten Maximalabstands zwischen dem Deckel und dem Speisenzubereitungsgefäß, insbesondere bezogen auf eine Oberseite des Speisenzubereitungsgefäß mit der Öffnung zum Einfüllen von Speisen. Vorzugsweise ist der Kontaktsensor ein Mikroschalter, um den Herstellungsaufwand gering zu halten und gleichzeitig einen Maximalabstand besonders einfach überwachen zu können. Alternativ oder ergänzend kann der Kontaktsensor als Näherungssensor ausgestaltet sein. Wenn die Detektionseinrichtung einen Gewichtssensor umfasst, kann auf bereits mindestens einen existierenden Gewichtssensor, der insbesondere im Fuß bzw. an den bis zu drei Füßen der Küchenmaschine angeordnet sind, zurückgegriffen werden. Ein Abheben des Deckels kann bevorzugt durch das Detektieren eines Gewichtsverlustes um den Betrag des Gewichts des Deckels, insbesondere zuzüglich einer Fehlertoleranz und/oder über eine definierte Zeitdauer, automatisch detektiert werden. Ein Schließen des Deckels kann bevorzugt durch ein Erhöhen des Gewichts um den Betrag des Gewichts des Deckels, insbesondere zuzüglich einer Fehlertoleranz und/oder über eine definierte Zeitdauer, detektiert werden.

Eine Detektionseinrichtung, die einen Deckelverriegelungssensor umfasst, kann in einer Ausgestaltung einen Motorstrom eines Motors zum automatischen Verriegeln des Deckels auf dem Speisenzubereitungsgefäß überwachen. Bevorzugt kann anhand des Motorstroms beim Schließen ermittelt werden, ob sich der Deckel ordnungsgemäß auf dem Speisenzubereitungsgefäß befindet. In einer Ausgestaltung kann anhand eines induzierten Motorstroms ermittelt werden, dass ein Benutzer den Deckel abhebt oder versucht abzuheben. Ein solcher Motorstrom wird durch das manuelle Bewegen des Deckels und damit einer Deckelverriegelung durch den Benutzer in die Motorspule induziert. Insbesondere ist eine Deckelverriegelung in Form von mindestens einer Walze, bevorzugt zwei Walzen, ausgeführt, die durch Motorkraft über einen äußeren Rand des Deckels bewegt oder rotiert werden können, um den Deckel fest auf dem Speisenzubereitungsgefäß zu fixieren.

Ein versuchtes Abheben des Deckels liegt dann vor, wenn ein Überschreiten eines festgelegten Maximalabstands zwischen dem Deckel und dem Speisenzubereitungsgefäß erfolgt.

In einer nicht zur vorliegenden Erfindung gehörenden Ausführungsform ist die Küchenmaschine so eingerichtet, dass der Probiermodus aktiviert wird, wenn die Detektionseinrichtung ein Abheben oder ein versuchtes Abheben des Deckels detektiert. In einer Ausführungsform ist die Küchenmaschine so eingerichtet, dass die Steuerungseinrichtung vom Probiermodus zurück in den Kochmodus wechselt, wenn die Detektionseinrichtung ein Schließen des Deckels detektiert. Der Benutzer kann so auf eine besonders sichere und komfortable Art und Weise ein verbessert reproduzierbares Kochergebnis erzielen.

Wenn die Steuerungseinrichtung vom Probiermodus zurück in den Kochmodus wechselt, wird der Speisenzubereitungsvorgang grundsätzlich wie vor dem Wechsel in den Probiermodus fortgesetzt. Die Kochparameter, die während des Probiermodus auf Werte gemäß dem Probiermodus modifiziert worden waren, werden dann wieder auf die Werte gemäß dem Kochmodus gesetzt.

Erfindungsgemäß ist die Küchenmaschine so eingerichtet, dass der Probiermodus aktiviert wird, wenn ein Bildzeichen auf einem Touchscreen-Display oder ein Knopf betätigt wird. Der Benutzer kann so auf eine besonders sichere und komfortable Art und Weise ein verbessert reproduzierbares Kochergebnis erzielen. Mit Knopf ist ein mechanischer Knopf gemeint, der vorzugsweise am Gehäuse der Küchenmaschine angeordnet ist und vom Benutzer mit der Hand betätigt werden kann. Insbesondere ist eine rezeptunabhängige Aktivierung des Probiermodus möglich. In einer Ausgestaltung können ein oder zwei Berührungssensoren im Deckel oder in den Walzen einer Verriegelungseinrichtung vorgesehen werden, die jeweils bei einer Berührung durch den Benutzer zum Aktivieren des Probiermodus führen.

Erfindungsgemäß ist die Küchenmaschine alternativ so eingerichtet, dass der Probiermodus aktiviert wird, wenn ein Aktivierungssignal von einem separaten Gerät empfangen wird, insbesondere von einem Smartphone, Tablet-PC, einem anderen Küchengerät oder einer anderen (vorzugsweise baugleichen) Küchenmaschine, insbesondere umfasst die Küchenmaschine eine Empfangseinheit zum Empfangen des Aktivierungssignals. Bevorzugt handelt es sich dabei um ein drahtloses Empfangen, insbesondere eine WLAN- oder Bluetooth-Verbindung. In einer Ausgestaltung weist die Küchenmaschine, durch die der laufende Kochvorgang durchgeführt wird, eine Steuerung auf, die lediglich von dem separaten Gerät empfangene Befehle mithilfe der Funktionskomponenten umsetzt.

Erfindungsgemäß ist die Küchenmaschine alternativ so eingerichtet, dass der Probiermodus aktiviert wird, wenn ein Rezeptschritt eines digitalen Rezeptes die Aktivierung des Probiermodus veranlasst. Der Benutzer kann so auf eine besonders sichere und komfortable Art und Weise ein verbessert reproduzierbares Kochergebnis erzielen. In einer Ausgestaltung kann die Steuerungseinrichtung auf ein digitales Rezept zugreifen und durch einen Rezeptschritt des Rezeptes veranlasst werden, eine der Funktionskomponenten in einer durch den Rezeptschritt definierten Weise zu betreiben. Vorzugsweise umfasst ein digitales Rezept mehrere Rezeptschritte. Einige dieser Rezeptschritte beinhalten einen Speisenzubereitungsvorgang durch Erhitzen, Zerkleinern und/oder Mischen einer Speise. Insbesondere können die Werte von einem oder mehreren Kochparametern durch einen Rezeptschritt für den Speisenzubereitungsvorgang dieses Rezeptschrittes festgelegt werden. Vorzugsweise kann der Rezeptschritt für einen Kochparameter einen Wert gemäß dem Kochmodus und einen Wert gemäß dem Probiermodus festlegen.

In einer Ausgestaltung ist die Küchenmaschine so eingerichtet ist, dass der Probiermodus deaktiviert wird, wenn ein Bildzeichen auf einem Touchscreen-Display oder ein Knopf ein zweites Mal betätigt wird, ein anderes Bildzeichen oder ein anderer Knopf betätigt wird, ein Knopf auf eine im Vergleich zur Aktivierung andere Art und Weise betätigt wird, oder ein Rezeptschritt eines digitalen Rezeptes die Deaktivierung des Probiermodus veranlasst. Wenn der Probiermodus deaktiviert wird, wechselt die Steuerungseinrichtung vom Probiermodus zurück in den Kochmodus. Die Kochparameter, die während des Probiermodus auf Werte gemäß dem Probiermodus modifiziert worden waren, werden auf die Werte gemäß dem Kochmodus gesetzt.

In einer Ausführungsform umfasst die Steuerungseinrichtung eine Freigabeeinheit, die so konfiguriert ist, dass die Aktivierung des Probiermodus nur dann zum Wechseln von dem Kochmodus in den Probiermodus führt, wenn die Freigabeeinheit diesen Wechsel freigibt. Der Benutzer kann so auf eine besonders sichere und komfortable Art und Weise ein verbessert reproduzierbares Kochergebnis erzielen.

In einer Ausführungsform gibt die Freigabeeinheit den Wechsel nur frei, wenn eine Temperatur, ein Drehmoment, eine Drehzahl, ein Druck und/oder ein Rezeptschritt eines digitalen Rezeptes ein festgelegtes Freigabekriterium erfüllen. Der Benutzer kann so auf eine besonders sichere und komfortable Art und Weise ein verbessert reproduzierbares Kochergebnis erzielen. Die Temperatur, das Drehmoment, die Drehzahl bzw. der Druck beziehen sich in dieser Ausführungsform jeweils insbesondere auf einen Soll-Wert oder aktuellen Messwert aus dem Speisenzubereitungsgefäß. Ein Rezeptschritt kann einen Freigabeparameter enthalten, der angibt, ob in den Probiermodus gewechselt werden darf oder nicht, insbesondere zeitaufgelöst über die Dauer des Rezeptschrittes. Das Freigabekriterium lautet dann, dass gemäß dem Freigabeparameter in den Probiermodus gewechselt werden darf.

In einer Ausgestaltung ist die Steuerungseinheit so eingerichtet, dass nur dann von dem Probiermodus zurück in den Kochmodus gewechselt werden kann, wenn die Freigabeeinheit diesen Wechsel freigibt. Insbesondere ist das Freigabekriterium für die Freigabe des Wechsels von dem Probiermodus zurück in den Kochmodus, dass das Speisenzubereitungsgefäß durch den Deckel geschlossen und/oder verriegelt ist. In einer Ausgestaltung wird zur Überprüfung dieses Freigabekriteriums ein Signal oder eine Information der Detektionseinrichtung herangezogen, die das Schließen des Deckels detektiert. In einer alternativen oder ergänzenden Ausgestaltung wird zur Überprüfung des Freigabekriteriums ein Signal oder eine Information der Verriegelungseinrichtung oder des Deckelverriegelungssensors herangezogen, aus dem sich ergibt, ob der Deckel mit dem Speisenzubereitungsgefäß verriegelt ist.

In einer Ausgestaltung ist eine Probenentnahmeinstrument-Erkennungseinheit vorgesehen, die das Nicht-Vorhandensein eines Probenentnahmeinstruments detektiert. Einer Fehlbenutzung kann auf diese Weise entgegengewirkt werden.

In einer Ausgestaltung, die auch ein eigenständiger Aspekt der Erfindung sein kann, ist ein insbesondere längliches Probenentnahmeinstrument vorgesehen. Das Probenentnahmeinstrument hat in einem oberen Bereich einen Griffabschnitt zum Halten durch einen Benutzer und in einem unteren Bereich einen Aufnahmeabschnitt zum Entnehmen einer Speisenprobe. Der Aufnahmeabschnitt kann also eine Speisenprobe aufnehmen. Der obere Bereich und der untere Bereich liegen auf gegenüberliegenden Seiten von einer Mitte des Probenentnahmeinstruments, insbesondere in Richtung der Längserstreckung des Probenentnahmeinstruments betrachtet. Zur Entnahme einer Speisenprobe wird das Probenentnahmeinstrument mit dem Aufnahmeabschnitt voran in das Speisenzubereitungsgefäß bewegt, in die Speise eingetaucht, so dass sich der Aufnahmeabschnitt mit einer Speisenprobe füllt, und wieder aus dem Speisenzubereitungsgefäß (nach oben) entfernt. Insbesondere ist das Probenentnahmeinstrument so geformt, dass im Falle einer Kollision des Probenentnahmeinstruments mit dem drehenden Werkzeug das Probenentnahmeinstrument durch das Werkzeug nach oben bewegt bzw. gedrückt wird. Nach oben meint in Richtung der Drehachse des Werkzeugs von dem Werkzeug weg. Ein Mitreißen, Mitdrehen oder Einklemmen des Probenentnahmeinstruments kann vermieden werden. Der Benutzer kann so auf eine besonders sichere und komfortable Art und Weise ein verbessert reproduzierbares Kochergebnis erzielen.

In einer Ausgestaltung ist das Probenentnahmeinstrument kellenartig geformt. Insbesondere ist das Probenentnahmeinstrument, vorzugsweise der untere Bereich, besonders bevorzugt der Aufnahmeabschnitt, v-artig geformt. Insbesondere weist der Aufnahmeabschnitt eine schräge Außenwandung auf, die einen Winkel von mindestens 30°, und/oder höchstens 60° zu einer Längserstreckungsrichtung des Probenentnahmeinstrument einschließt. Falls die Außenwandung gekrümmt ist, kann zur Messung des Winkels eine Mittellinie durch die gekrümmte Außenwand herangezogen werden. Der Aufnahmeabschnitt kann geradlinige und/oder gekrümmte Abschnitte aufweisen. Insbesondere ist der Boden des Aufnahmeabschnitts gekrümmt. In einer Ausgestaltung verfügt das Probenentnahmeinstrument über eine Kommunikationsschnittstelle zum drahtlosen Übertragen von Zustandsinformationen zu einer Steuerungseinrichtung einer Küchenmaschine und/oder über mindestens einen Sensor zum Erfassen eines Zustandsinformation einer Speise (im Speisenzubereitungsgefäß) oder einer Speisenprobe (im Aufnahmeabschnitt). Der Zustand der Speise während der Entnahme der Speisenprobe kann auf diese Weise von der Steuerungseinrichtung ausgewertet werden. Der Benutzer kann so auf eine besonders sichere und komfortable Art und Weise ein verbessert reproduzierbares Kochergebnis erzielen.

Ein weiterer Aspekt der Erfindung betrifft ein Verfahren zum Entnehmen einer Speisenprobe aus einem Speisenzubereitungsgefäß einer Küchenmaschine die die Schritte nach Anspruch 11 umfasst. Es wird so ermöglicht, dass ein Benutzer auf eine wie gewohnt sichere und komfortable Art und Weise ein verbessert reproduzierbares Kochergebnis erzielen kann. Insbesondere wird der Deckel von dem Speisenzubereitungsgefäß abgehoben, bevor die Speisenprobe entnommen wird. Die Merkmale, Definitionen und Ausgestaltungen des eingangs beschriebenen Aspekts der Erfindung gelten auch für dieses Verfahren.

In einer Ausführungsform umfasst das Verfahren den zusätzlichen Schritt: Vergleichen einer Zustandsinformation aus der Entnahme der Speisenprobe oder von der entnommenen Speiseprobe mit mindestens einem Zielkriterium. Eine Zustandsinformation aus der Entnahme der Speisenprobe kann beispielsweise die Temperatur der Speise sein, von der die Speisenprobe entnommen worden ist. Eine Zustandsinformation von der entnommenen Speiseprobe kann beispielsweise eine Salzkonzentration sein. In der Steuerungseinrichtung sind bevorzugt das mindestens eine Zielkriterium gespeichert, so dass ein Vergleich der Zustandsinformation mit dem Zielkriterium zur Detektion einer Abweichung vom gewünschten Zustand der Speise genutzt werden kann. In einer Ausgestaltung kann die Zustandsinformation aus der Entnahme der Speisenprobe durch einen Sensor des Probenentnahmeinstrument gemessen werden. In einer alternativen oder ergänzenden Ausgestaltung kann die Zustandsinformation von der entnommenen Speise durch einen Sensor des Probenentnahmeinstrumentes gemessen werden. Über eine Kommunikationsschnittstelle kann die Zustandsinformation von dem Probenentnahmeinstrument an die Steuerungseinrichtung der Küchenmaschine übertragen werden, die auf Basis der Zustandsinformation durch den Vergleich mit dem Zielkriterium beispielsweise Maßnahmen zur Optimierung des Speisenzubereitungsvorgangs veranlassen kann. Insbesondere wird zur Optimierung ein Kochparameter angepasst. Zum Beispiel wird der Soll-Kochtemperatur gemäß dem Kochmodus verändert. Es ist auch möglich, dass der Benutzer aufgefordert wird, eine Maßnahme zu ergreifen, z.B. ein Gewürz hinzuzufügen.

In einer Ausführungsform weist das Probenentnahmeinstrument einen v-artig geformten Aufnahmeabschnitt zum Aufnehmen einer Speisenprobe auf, dessen Außenwandung einen Winkel α zwischen 30° bis 60° zu einer Längserstreckungsrichtung des Probenentnahmeinstrument einschließt. Es wird so ermöglicht, dass ein Benutzer auf eine wie gewohnt sichere und komfortable Art und Weise ein verbessert reproduzierbares Kochergebnis erzielen kann.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Küchenmaschine mit einem Teilschnitt durch das Speisenzubereitungsgefäß;
- Figur 2:: Schematische Darstellung der Entnahme einer Speisenprobe.

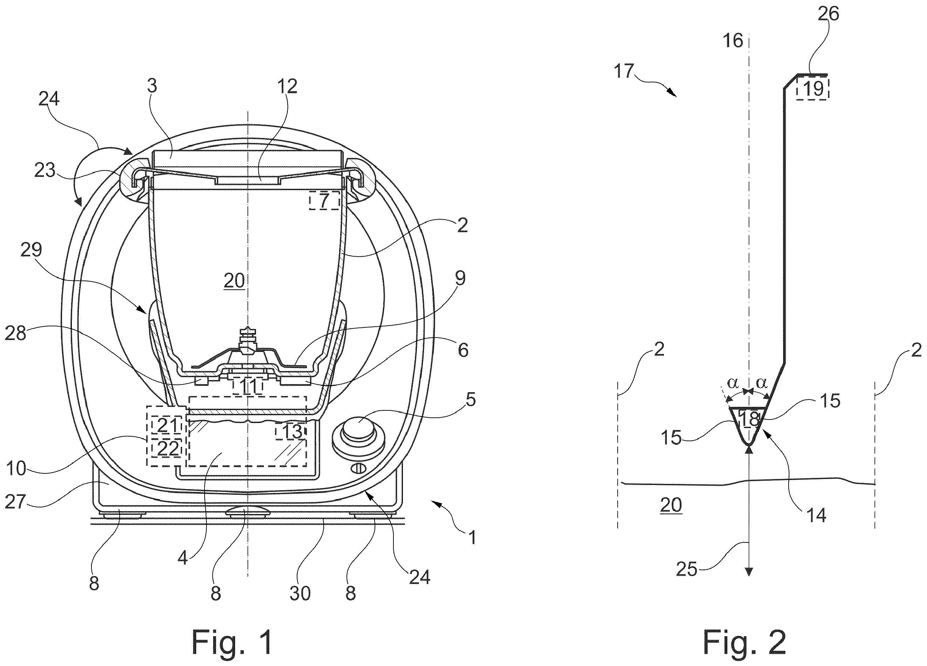

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen der Speise 20 insbesondere im Bodenbereich des Speisenzubereitungsgefäßes 2 vorhanden sein. Zum Zerkleinern und/oder Mischen der Speise 20 kann ein drehbares Werkzeug 9 eingesetzt sein, das über eine nicht gezeigte Welle insbesondere durch eine Öffnung im Boden des Speisenzubereitungsgefäßes 2 mit einem Antrieb 11 gekoppelt ist. Ein Gehäuse 27 der Küchenmaschine umschließt den Antrieb 11 und stellt eine Aufnahme 29 für das Speisenzubereitungsgefäß 2 bereit. Die Küchenmaschine 1 hat eine Steuerungseinrichtung 10 zum Ansteuern der Funktionskomponente wie Heizelement 6 oder Werkzeug 9 bzw. Antrieb 11. Messsensoren zum Erfassen eines Ist-Zustands wie z.B. ein Temperatursensor 28 können vorhanden sein. Die Steuerungseinrichtung 10 umfasst einen Prozessor 21 und einen Speicher 22.

Ein Deckel 3 kann zum Schließen des Speisenzubereitungsgefäßes 2 vorgesehen sein. Der Deckel 3 kann eine Deckelöffnung 12 enthalten, um Zutaten in das durch den Ein Deckel 3 kann zum Schließen des Speisenzubereitungsgefäßes 2 vorgesehen sein. Der Deckel 3 kann eine Deckelöffnung 12 enthalten, um Zutaten in das durch den Deckel 3 überwiegend abgedeckte Speisenzubereitungsgefäßes 2 zu geben. Eine Verriegelungseinrichtung 23 kann vorgesehen sein, um den Deckel 3 beispielsweise mit Walzen wie in Figur 1 gezeigt im geschlossen Zustand zu verriegeln. Durch eine Schwenkbewegung 24 kann zwischen einem verriegelten und entriegelten Zustand gewechselt werden, vorzugsweise mithilfe eines nicht gezeigten Motors der Verriegelungseinrichtung 23. Der verriegelte oder entriegelte Zustand kann beispielsweise durch einen nicht dargestellten Deckelverriegelungssensor detektiert werden.

Über eine Benutzerschnittstelle 24, die ein Touchscreen-Display 4 oder einen Knopf 5 umfassen, kann der Benutzer Informationen und Anweisungen von der Steuerungseinrichtung 10 erhalten und Eingaben für die Steuerungseinrichtung 10 tätigen. Vorzugsweise hat die Steuerungseinrichtung 10 Zugriff auf digitale Rezepte mit mehrere Rezeptschritten, die mithilfe der Benutzerschnittstelle 24 durch den Benutzer und die Küchenmaschine zum Zubereiten einer Speise 20 umgesetzt werden können.

Die Steuerungseinrichtung 10 sorgt auf Basis von einem oder mehreren Kochparametern dafür, dass in einem Kochmodus eine Speise 20 in dem Speisenzubereitungsgefäß 2 in gewünschter Weise erhitzt, zerkleinert und/oder gemischt wird. Ein Probiermodus ist für ein Entnehmen einer Speisenprobe vorgesehen, wobei mindestens einer der Kochparameter im Vergleich zum Kochmodus für ein verändertes Fortführen des Speisenzubereitungsvorgangs modifiziert wird, wenn der Probiermodus aktiviert wird.

In einer nicht zur vorliegenden Erfindung gehörenden Ausführungsform kann die Aktivierung des Probiermodus durch ein Detektieren des Abhebens des Deckels 3 initiiert werden. Hierzu können beispielsweise Gewichtssensoren 8 in den Standfüßen der Küchenmaschine 1, durch die das Gehäuse 27 auf einem Untergrund 30 steht, oder ein Kontaktsensor 7 am Speisenzubereitungsgefäß 2 oder Deckel 3 eingesetzt werden. Erfindungsgemäß ist ein Aktivieren mithilfe eines Kopfes 5 oder über das Drücken eines Bildzeichens 13 auf dem Touchscreen-Display 4 oder durch ein Rezeptschritt möglich.

Insbesondere nach einer Freigabe der Aktivierung wechselt die Steuerungseinrichtung in den Probiermodus. Dies hat zur Folge, dass mindestens ein Kochparameter, der im Kochmodus über einem festgelegten Soll-Wert gemäß dem Probiermodus zum Ansteuern einer Funktionskomponente verwendet worden war, auf den niedrigeren Soll-Wert gemäß dem Probiermodus reduziert wird, also modifiziert wird. Beispielsweise werden das Drehmoment, die Drehzahl oder die Temperatur auf entsprechende Soll-Wert gemäß dem Probiermodus reduziert.

In einer Ausgestaltung ist vorgesehen, dass nach dem Modifizieren des mindestens einen Kochparameters im Probiermodus erst bei Unterschreiten eines vorgegebenen Schwellwertes einer entsprechenden Messgröße, z.B. Ist-Temperatur oder Drehzahl des Werkzeugs in dem Speisenzubereitungsgefäß, ein Abnehmen des Deckels 3 zugelassen wird. Beispielsweise wird erst dann die Verriegelungseinrichtung 23 für ein Entriegeln des Deckels 3 angesteuert.

In einer Ausgestaltung wird das Abheben des Deckels 3 detektiert. Falls nach einer festgelegten Zeitdauer nach der Aktivierung des Probiermodus der Deckel 3 nicht abgehoben wurde, kann automatisch in den Kochmodus zurück gewechselt werden.

Im Probiermodus kann der Benutzer eine Speisenprobe von der Speise entnehmen und diese beispielsweise zum Abschmecken der Speise benutzen.

In einer Ausgestaltung wird das Schließen des Deckels 3 detektiert und die Steuerungseinrichtung 10 ist so eingerichtet, dass von dem Probiermodus erst dann zurück in den Kochmodus gewechselt wird, wenn das Speisenzubereitungsgefäß 2 durch den Deckel 3 geschlossen und/oder verriegelt ist.

Durch die Deaktivierung des Probiermodus und/oder bei Aufliegen oder nach Verriegeln des Deckels 3 wird der vorherige Zustand vor Aktivierung des Probiermodus wieder angefahren, um den Speisenzubereitungsvorgang fortzuführen. In einer Ausgestaltung kann vorgesehen werden, dass in Abhängigkeit von der zeitlichen Dauer des Probiermodus und/oder in Abhängigkeit vom Rezeptschritt die Steuerungseinrichtung automatisch mindestens einen Kochparameter gemäß dem Kochmodus korrigiert. Mit Korrigieren ist gemeint, dass wenn durch den Probiermodus eine unerwünschte Beeinträchtigung des Speisenzubereitungsvorgangs durch das veränderte Fortführen während des Probiermodus zu befürchten ist oder vorliegt, diese Beeinträchtigung beim Fortführen des Speisenzubereitungsvorgangs im Kochmodus nach dem Probiermodus durch Korrigieren mindestens eines Kochparameters möglichst kompensiert wird.

Die Figur 2 illustriert schematisch den Vorgang einer Entnahme einer Speisenprobe durch eine Eintauchbewegung 25 aus einem nur ausschnitthaft und durch Strichlinien angedeuteten Speisenzubereitungsgefäß 2 mit einer Speise 20 darin. Für die Entnahme kann grundsätzlich ein herkömmlicher Löffel verwendet werden. In Figur 2 ist ein für die Entnahme einer Speiseprobe vorgesehenes, längliches, kellenartiges Probenentnahmeinstrument 17 mit einem Griffabschnitt 26 zum Halten durch einen Benutzer und einen Aufnahmeabschnitt 14 zum Aufnehmen der Speiseprobe gezeigt. Das Probenentnahmeinstrument 17 ist bevorzugt mindestens so lang wie das Speisenzubereitungsgefäß 2 tief ist. Der v-artig geformte Aufnahmeabschnitt 14 hat eine gekrümmte oder geradlinige Außenwandung 15 mit einem Winkel α zwischen 30° bis 60° zur Längserstreckungsrichtung 16. Insbesondere ist ein Sensor 18 zum Erfassen einer Zustandsinformation der Speise 20 oder der Speisenprobe und/oder eine Kommunikationsschnittstelle 19 an dem Probenentnahmeinstrument 17 angebracht.

## Patentansprüche

1. Küchenmaschine (1) zum Durchführen eines Speisenzubereitungsvorgangs durch Erhitzen, Zerkleinern und/oder Mischen einer Speise (20) in einem Speisenzubereitungsgefäß (2), wobei die Küchenmaschine (1) eine Steuerungseinrichtung (10) umfasst, die so eingerichtet ist, dass die Steuerungseinrichtung (10) auf Basis von einem oder mehreren Kochparametern dafür sorgt, dass in einem Kochmodus eine Speise (20) in dem Speisenzubereitungsgefäß (2) erhitzt, zerkleinert und/oder gemischt wird, wobei ein Probiermodus für ein Entnehmen einer Speisenprobe vorgesehen ist und die Steuerungseinrichtung (10) so eingerichtet ist, dass mindestens einer der Kochparameter im Vergleich zum Kochmodus für ein verändertes Fortführen des Speisenzubereitungsvorgangs modifiziert wird, wenn der Probiermodus aktiviert wird, **dadurch gekennzeichnet, dass** die Küchenmaschine (1) so eingerichtet ist, dass der Probiermodus aktiviert wird, wenn ein Bildzeichen (13) auf einem Touchscreen-Display (4) oder ein Knopf (5) betätigt wird, wenn ein Aktivierungssignal von einem separaten Gerät empfangen wird, oder wenn ein Rezeptschritt eines digitalen Rezeptes die Aktivierung des Probiermodus veranlasst.

2. Küchenmaschine (1) nach Anspruch 1, **dadurch gekennzeichnet, dass** ein Kochparameter von dem mindestens einen Kochparameter, der im Probiermodus im Vergleich zum Kochmodus für das veränderte Fortführen des Speisenzubereitungsvorgangs modifiziert ist, einer der folgenden Kochparameter ist: eine Soll-Drehrichtung, ein Soll-Drehmoment oder eine Soll-Drehzahl für das Zerkleinern und/oder Mischen, eine Soll-Temperatur für das Erhitzen oder ein Soll-Druck im Speisenzubereitungsgefäß (2).

3. Küchenmaschine (1) nach dem vorhergehenden Anspruch, **dadurch gekennzeichnet, dass** das Soll-Drehmoment im Probiermodus höchstens 0,4 N*m ist.

4. Küchenmaschine (1) nach einem der vorhergehenden Ansprüche, **dadurch gekennzeichnet, dass** die Soll-Drehzahl im Probiermodus höchstens 220 U/min ist.

5. Küchenmaschine (1) nach einem der vorhergehenden Ansprüche, **dadurch gekennzeichnet, dass** die Soll-Temperatur im Probiermodus höchstens 80 °C ist.

6. Küchenmaschine (1) nach einem der vorhergehenden Ansprüche, **dadurch gekennzeichnet, dass** die Küchenmaschine (1) eine Detektionseinrichtung zum Detektieren eines Abhebens, eines versuchten Abhebens oder eines Schließens eines Deckels (3) umfasst.

7. Küchenmaschine (1) nach dem vorhergehenden Anspruch, **dadurch gekennzeichnet, dass** die Detektionseinrichtung einen Kontaktsensor (7), einen Gewichtssensor (8) oder einen Deckelverriegelungssensor umfasst.

8. Küchenmaschine (1) nach einem der zwei vorhergehenden Ansprüche, **dadurch gekennzeichnet, dass** die Küchenmaschine (1) so eingerichtet ist, dass die Steuerungseinrichtung (10) vom Probiermodus zurück in den Kochmodus wechselt, wenn die Detektionseinrichtung ein Schließen des Deckels (3) detektiert.

9. Küchenmaschine (1) nach einem der vorhergehenden Ansprüche, **dadurch gekennzeichnet, dass** die Steuerungseinrichtung (10) eine Freigabeeinheit umfasst, die so konfiguriert ist, dass die Aktivierung des Probiermodus nur dann zum Wechseln von dem Kochmodus in den Probiermodus führt, wenn die Freigabeeinheit diesen Wechsel freigibt.

10. Küchenmaschine (1) nach dem vorhergehenden Anspruch, **dadurch gekennzeichnet, dass** die Freigabeeinheit den Wechsel nur freigibt, wenn eine Temperatur, ein Drehmoment, eine Drehzahl, ein Druck und/oder ein Rezeptschritt eines digitalen Rezeptes ein festgelegtes Freigabekriterium erfüllen.

11. Verfahren zum Entnehmen einer Speisenprobe aus einem Speisenzubereitungsgefäß (2) einer Küchenmaschine (1) mit folgenden Schritten:
- Erhitzen, Zerkleinern und/oder Mischen einer Speise (20) in dem Speisenzubereitungsgefäß (2) auf Basis von einem oder mehreren Kochparametern gemäß einem Kochmodus einer Steuerungseinrichtung (10) der Küchenmaschine (1),
- Aktivieren eines Probiermodus der Steuerungseinrichtung (10),
- Modifizieren mindestens einer der Kochparameter im Vergleich zum Kochmodus durch die Steuerungseinrichtung (10) für ein verändertes Fortführen des Speisenzubereitungsvorgangs,
- Fortführen des Speisenzubereitungsvorgangs auf Basis der Kochparameter, von denen mindestens ein Kochparameter gemäß dem Probiermodus modifiziert wurde, **dadurch gekennzeichnet, dass** das Verfahren ferner die folgenden Schritte umfasst:
- Entnehmen der Speisenprobe durch ein Probenentnahmeinstrument (17) von der Speise (20) in dem Speisenzubereitungsgefäß (2),
wobei der Probiermodus aktiviert wird, wenn ein Bildzeichen (13) auf einem Touchscreen-Display (4) oder ein Knopf (5) betätigt wird, wenn ein Aktivierungssignal von einem separaten Gerät empfangen wird, oder wenn ein Rezeptschritt eines digitalen Rezeptes die Aktivierung des Probiermodus veranlasst.

12. Verfahren nach dem vorhergehenden Anspruch, umfassend den zusätzlichen Schritt: Vergleichen einer Zustandsinformation aus der Entnahme der Speisenprobe oder von der entnommenen Speiseprobe mit mindestens einem Zielkriterium, wobei das Probenentnahmeinstrument (17) über eine Kommunikationsschnittstelle (19) zum drahtlosen Übertragen von Zustandsinformationen zur Steuerungseinrichtung (10) der Küchenmaschine (1) und/oder über mindestens einen Sensor (18) zum Erfassen einer Zustandsinformation der Speise (20) oder der Speisenprobe verfügt.

13. Verfahren nach einem der zwei vorhergehenden Ansprüche, wobei das Probenentnahmeinstrument (17) einen v-artig geformten Aufnahmeabschnitt (14) zum Aufnehmen einer Speisenprobe aufweist, dessen Außenwandung (15) einen Winkel α zwischen 30° bis 60° zu einer Längserstreckungsrichtung (16) des Probenentnahmeinstrument (17) einschließt.

## Claims

1. Food processor (1) for performing a food preparation process by heating, chopping and/or mixing a food (20) in a food preparation vessel (2), wherein the food processor (1) comprises a control device (10) configured such that the control device (10) ensures, based on one or more cooking parameters, that in a cooking mode a food (20) is heated, chopped and/or mixed in the food preparation vessel (2), wherein a sampling mode is provided for taking a food sample and the control device (10) is configured such that at least one of the cooking parameters is modified compared to the cooking mode for a modified continuation of the food preparation process when the sampling mode is activated, **characterized in that** the food processor (1) is configured such that the sampling mode is activated when a graphic symbol (13) on a touch screen display (4) or a button (5) is operated, when an activation signal is received from a separate device, or when a recipe step of a digital recipe causes activation of the sampling mode.

2. Food processor (1) according to claim 1, **characterized in that** a cooking parameter of the at least one cooking parameter modified in the sampling mode compared to the cooking mode for the modified continuation of the food preparation process is one of the following cooking parameters: a desired direction of rotation, a desired torque or a desired rotation number for the chopping and/or mixing, a desired temperature for heating or a desired pressure in the food preparation vessel (2).

3. Food processor (1) according to the preceding claim, **characterized in that** the desired torque in the sampling mode is at most 0.4 N*m.

4. Food processor (1) according to one of the preceding claims, **characterized in that** the desired rotation number in the sampling mode is at most 220 rpm.

5. Food processor (1) according to one of the preceding claims, **characterized in that** the desired temperature in the sampling mode is at most 80 °C.

6. Food processor (1) according to one of the preceding claims, **characterized in that** the food processor (1) comprises detection means for detecting a lifting, an attempted lifting or a closing of a lid (3).

7. Food processor (1) according to the preceding claim, **characterized in that** the detection means comprises a contact sensor (7), a weight sensor (8) or a lid locking sensor.

8. Food processor (1) according to one of the two preceding claims, **characterized in that** the food processor (1) is configured such that the control device (10) changes from the sampling mode back to the cooking mode when the detection means detects a closing of the lid (3).

9. Food processor (1) according to one of the preceding claims, **characterized in that** the control device (10) comprises an enabling unit configured such that the activation of the sampling mode only results in a change from the cooking mode to the sampling mode if the enabling unit enables this change.

10. Food processor (1) according to the preceding claim, **characterized in that** the enabling unit enables the change only if a temperature, a torque, a rotation number, a pressure and/or a recipe step of a digital recipe meet a specified enabling criterion.

11. Method for taking a food sample from a food preparation vessel (2) of a food processor (1) comprising the following steps:
- Heating, chopping and/or mixing a food (20) in the food preparation vessel (2) based on one or more cooking parameters according to a cooking mode of a control device (10) of the food processor (1),
- Activating a sampling mode of the control device (10),
- Modifying at least one of the cooking parameters compared to the cooking mode by the control device (10) for a modified continuation of the food preparation process,
- Continuing the food preparation process based on the cooking parameters, at least one cooking parameter of which has been modified according to the sampling mode, **characterized in that** the method further comprises the following steps:
- Taking the food sample by a sampling instrument (17) from the food (20) in the food preparation vessel (2),
wherein the sampling mode is activated when a graphic symbol (13) on a touch screen display (4) or a button (5) is operated, when an activation signal is received from a separate device, or when a recipe step of a digital recipe causes activation of the sampling mode.

12. Method according to the preceding claim, comprising the additional step of: comparing status information from the taking of the food sample or from the taken food sample with at least one target criterion, wherein the sampling instrument (17) comprises a communication interface (19) for wireless transmission of status information to the control device (10) of the food processor (1) and/or at least one sensor (18) for detecting status information of the food (20) or the food sample.

13. Method according to one of the two preceding claims, wherein the sampling instrument (17) comprises a v-shaped receiving portion (14) for receiving a food sample, the outer wall (15) of which encloses an angle α between 30° to 60° to a longitudinal extension direction (16) of the sampling instrument (17).

## Revendications

1. Machine de cuisine (1) pour effectuer une opération de préparation d'aliments en chauffant, en broyant et/ou en mélangeant un aliment (20) dans un récipient de préparation d'aliments (2), dans laquelle la machine de cuisine (1) comprend un dispositif de commande (10) qui est agencé de manière à ce que le dispositif de commande (10) veille, sur la base d'un ou de plusieurs paramètres de cuisson, à ce que, dans un mode cuisson, un aliment (20) soit chauffé, broyé et/ou mélangé dans le récipient de préparation d'aliments (2), dans laquelle un mode dégustation est prévu pour un prélèvement d'un échantillon d'aliment et le dispositif de commande (10) est agencé de telle sorte, qu'au moins l'un des paramètres de cuisson est modifié par rapport au mode cuisson pour une poursuite modifiée du processus de préparation d'aliments lorsque le mode goûter est activé, **caractérisé en ce que** la machine de cuisine (1) est agencée de sorte que le mode dégustation est activé lorsqu'un symbole (13) sur un écran tactile (4) ou un bouton (5) est actionné, lorsqu'un signal d'activation est reçu d'un appareil séparé, ou lorsqu'une étape de recette d'une recette numérique cause l'activation du mode dégustation.

2. Machine de cuisine (1) selon la revendication 1, **caractérisée en ce qu'**un paramètre de cuisson parmi ledit au moins un paramètre de cuisson modifié dans le mode dégustation par rapport au mode cuisson pour la poursuite modifiée du processus de préparation d'aliments est l'un des paramètres de cuisson suivants : un sens de rotation de consigne, un couple de consigne ou une vitesse de rotation de consigne pour le broyage et/ou le mélange, une température de consigne pour le chauffage ou une pression de consigne dans le récipient de préparation d'aliments (2).

3. Machine de cuisine (1) selon la revendication précédente, **caractérisée en ce que** le couple de consigne en mode dégustation est au plus de 0,4 N*m.

4. Machine de cuisine (1) selon l'une des revendications précédentes, **caractérisée en ce que** la vitesse de rotation de consigne en mode dégustation est au plus de 220 tr/min.

5. Machine de cuisine (1) selon l'une des revendications précédentes, **caractérisée en ce que** la température de consigne en mode dégustation est au plus de 80°C.

6. Machine de cuisine (1) selon l'une des revendications précédentes, **caractérisée en ce que** la machine de cuisine (1) comprend un dispositif de détection pour détecter un décollement, une tentative de décollement ou une fermeture d'un couvercle (3).

7. Machine de cuisine (1) selon la revendication précédente, **caractérisée en ce que** le dispositif de détection comprend un capteur de contact (7), un capteur de poids (8) ou un capteur de verrouillage de couvercle.

8. Machine de cuisine (1) selon l'une des deux revendications précédentes, **caractérisée en ce que** la machine de cuisine (1) est agencée pour que le dispositif de commande (10) repasse du mode dégustation au mode cuisson lorsque le dispositif de détection détecte une fermeture du couvercle (3).

9. Machine de cuisine (1) selon l'une des revendications précédentes, **caractérisée en ce que** le dispositif de commande (10) comprend une unité de déblocage configurée de telle sorte que l'activation du mode dégustation n'entraîne le passage du mode cuisson au mode dégustation que si l'unité de déblocage débloque ce passage.

10. Machine de cuisine (1) selon la revendication précédente, **caractérisée en ce que** l'unité de déblocage ne débloque le changement que lorsqu'une température, un couple, une vitesse de rotation, une pression et/ou une étape de recette d'une recette numérique répondent à un critère de déblocage défini.

11. Procédé de prélèvement d'un échantillon d'aliment d'un récipient de préparation d'aliments (2) d'une machine de cuisine (1) avec des étapes suivantes :
- chauffer, broyer et/ou mélanger un aliment (20) dans le récipient de préparation d'aliments (2) sur la base d'un ou de plusieurs paramètres de cuisson selon un mode cuisson d'un dispositif de commande (10) de la machine de cuisine (1),
- activer un mode dégustation du dispositif de commande (10),
- modifier au moins un des paramètres de cuisson par rapport au mode cuisson par le dispositif de commande (10) pour une poursuite modifiée du processus de préparation d'aliments,
- poursuivre le processus de préparation d'aliments sur la base des paramètres de cuisson, dont au moins un paramètre de cuisson a été modifié conformément au mode dégustation,
**caractérisé en ce que** le procédé comprend en outre les étapes suivantes :
- prélèvement de l'échantillon d'aliment par un instrument de prélèvement d'échantillons (17) de l'aliment (20) dans le récipient de préparation d'aliments (2),
dans lequel le mode dégustation est activé lorsqu'un pictogramme (13) sur un écran tactile (4) ou un bouton (5) est actionné, lorsqu'un signal d'activation est reçu d'un appareil séparé, ou lorsqu'une étape de recette d'une recette numérique cause l'activation du mode dégustation.

12. Procédé selon la revendication précédente, comprenant l'étape supplémentaire
comparer une information d'état provenant du prélèvement de l'échantillon d'aliment ou de l'échantillon d'aliment prélevé avec au moins un critère cible, dans lequel l'instrument de prélèvement d'échantillons (17) dispose d'une interface de communication (19) pour transmettre sans fil des informations d'état au dispositif de commande (10) de la machine de cuisine (1) et/ou d'au moins un capteur (18) pour détecter une information d'état de l'aliment (20) ou de l'échantillon d'aliment.

13. Procédé selon l'une des deux revendications précédentes, dans lequel l'instrument de prélèvement d'échantillons (17) présente une section de réception (14) en forme de V pour la réception d'un échantillon d'aliment, dont la paroi extérieure (15) forme un angle α compris entre 30° et 60° par rapport à une direction d'extension longitudinale (16) de l'instrument de prélèvement d'échantillons (17).
